# EUROPEAN PATENT APPLICATION

(11) **EP 4 459 342 A1**
(43) Date of publication of application: **06.11.2024**
(21) Application number: 22915752.4
(22) Date of filing: 15.12.2022
(51) Int. Cl.: G02B 6/44

(54) **OPTICAL FIBER ASSEMBLY AND OPTICAL CABLE**

(30) Priority: 27.12.2021 JP 2021212173
(71) Applicant: Fujikura Ltd., Tokyo 135-8512 (JP)
(72) Inventor: SATO, Hironori, Sakura-shi, Chiba 285-8550 (JP); ISHIDA, Itaru, Sakura-shi, Chiba 285-8550 (JP); OSATO, Ken, Sakura-shi, Chiba 285-8550 (JP)
(74) Representative: Plasseraud IP
(86) International application number: PCT/JP2022/046227
(87) International publication number: WO 2023/127528

(57) **Abstract**

An optical fiber unit that configures an optical fiber assembly and is formed by stacking optical fiber ribbons includes a first fiber unit located on a neutral line and a second fiber unit located farthest from the neutral line, in a certain cross section of the optical fiber assembly. Regarding the sine value of an angle formed by a radial direction straight line connecting the center of the optical fiber assembly and the center of gravity of the optical fiber ribbon and a ribbon width direction straight line connecting both ends of the optical fiber ribbon, when the average value of the sine values of the optical fiber ribbons of the same optical fiber unit is defined as an average sine value, the average sine value of the second fiber unit in a certain cross section is larger than the average sine value of at least one first fiber unit.

## Description

### [Technical Field]

The present invention relates to an optical fiber assembly and an optical cable.

Priority is claimed on Japanese Patent Application No. 2021-212173, filed December 27, 2021, the content of which is incorporated herein by reference.

### [Background Art]

Patent Document 1 discloses an optical fiber cable (optical cable) having a cable core (optical fiber assembly) in which a plurality of optical fiber units (ribbon core wire unit) are aggregated, and the optical fiber unit is formed by stacking and bundling a plurality of optical fiber ribbons.

### [Citation List]

### [Patent Document]

### [Patent Document 1]

Japanese Unexamined Patent Application, First Publication No. 2007-233252

### [Summary of Invention]

### [Technical Problem]

In a case where the optical cable having the above-described optical fiber assembly is manufactured without a measure, when bending occurs in the optical cable or shrinkage occurs in the outer sheath of the optical cable in a low-temperature environment, stress (mainly, bending stress) is likely to be concentrated on the optical fiber of a specific optical fiber unit. When stress is concentrated on the specific optical fiber, there is a problem in that transmission loss of the optical fiber increases.

Further, in recent years, there has been a demand for an optical fiber cable having a larger number of optical fibers. Therefore, it is required to dispose a larger number of optical fiber units in a limited internal space of the optical fiber assembly. That is, there is a demand for improving the utilization efficiency of the internal space of the optical fiber assembly by using the optical fiber units.

The present invention has been made in view of the above-described circumstances, and an object of the present invention is to provide an optical fiber assembly capable of reducing an increase in transmission loss of an optical fiber and improving a utilization efficiency of an internal space in which a plurality of optical fiber units are disposed, and an optical cable including the optical fiber assembly .

### [Solution to Problem]

A optical fiber assembly according to a first aspect of the present invention is an optical fiber assembly configured by bundling a plurality of optical fiber units each of which is formed by stacking a plurality of optical fiber ribbons, in which a stacked state of the plurality of optical fiber ribbons in the optical fiber unit is collapsed such that a ribbon surface of at least one of the optical fiber ribbons configuring the optical fiber unit is bent, in a cross section of the optical fiber assembly orthogonal to a longitudinal direction of the optical fiber assembly at least at a certain position in the longitudinal direction, the plurality of optical fiber units include first fiber units located on a neutral line of bending of the optical fiber assembly and second fiber units located farthest from the neutral line, in the cross section of the optical fiber assembly orthogonal to the longitudinal direction, regarding a sine value sinα of an angle α formed by a radial direction straight line connecting a center of the optical fiber assembly and a center of gravity of the optical fiber ribbon and a ribbon width direction straight line connecting both ends of the optical fiber ribbon, an average value of the sine values sinα of the plurality of optical fiber ribbons in the same optical fiber unit is defined as an average sine value sinαₐᵥₑ, and the average sine value sinαₐᵥₑ of the second fiber units is larger than the average sine value sinαₐᵥₑ of at least one of the first fiber units, in a cross section of the optical fiber assembly orthogonal to the longitudinal direction at least at the certain position in the longitudinal direction.

A second aspect of the present invention relates to an optical cable including the optical fiber assembly according to the first aspect, and an application member that applies, to the optical cable, a bending anisotropy that makes the optical cable easier to bend in a direction centered on the neutral line.

### [Advantageous Effects of Invention]

According to the present invention, it is possible to reduce an increase in transmission loss of the optical fiber and to improve the utilization efficiency of the internal space in which a plurality of optical fiber units are disposed.

### [Brief Description of Drawings]

FIG. 1 is a schematic cross-sectional view of an optical cable including an optical fiber assembly according to the present embodiment.
FIG. 2 is a perspective view schematically showing an optical fiber unit provided in the optical fiber assembly of FIG. 1.
FIG. 3 is a perspective view schematically showing optical fiber ribbons included in the optical fiber unit of FIG. 2.
FIG. 4 is a diagram showing an example of a cross-sectional shape of the optical fiber unit of FIG. 2.
FIG. 5 is a cross-sectional view schematically showing an example of the disposition of the plurality of optical fiber units in the optical fiber assembly according to the present embodiment.
FIG. 6 is a cross-sectional view schematically showing a comparative example of the disposition of the plurality of optical fiber units in the optical fiber assembly.
FIG. 7 is a diagram showing an angle α formed by a radial direction straight line R1 connecting a center C of the optical fiber assembly and a center of gravity G of the optical fiber ribbon and a ribbon width direction straight line W1 connecting both ends of the optical fiber ribbon.
FIG. 8 is a table showing a relationship between an average sine value sinαₐᵥₑ of a plurality of optical fiber units in the example of FIG. 5 and an increase amount of transmission loss of the optical fiber.
FIG. 9 is a table showing a relationship between an average sine value sinαₐᵥₑ of a plurality of optical fiber units in the comparative example in FIG. 6 and an increase amount of a transmission loss of the optical fiber.

### [Description of Embodiments]

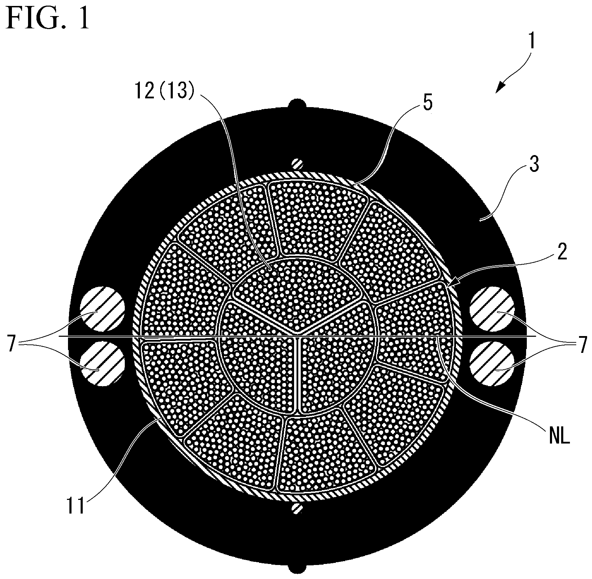

Hereinafter, an embodiment of the present invention will be described with reference to FIGS. 1 to 9.

As shown in FIG. 1, an optical fiber assembly 2 according to the present embodiment configures a part of the optical cable 1. The optical cable 1 according to the present embodiment is a so-called slotless type optical cable that does not have a slot rod in which a groove (slot) for housing an optical fiber is formed. The optical cable 1 includes an optical fiber assembly 2 and an outer sheath 3.

The optical fiber assembly 2 is formed by bundling a plurality of optical fiber units 11. The optical fiber unit 11 is a structural body in which a plurality of optical fibers 13 are bundled. A specific structure of the optical fiber unit 11 will be described below. The optical fiber assembly 2 according to the present embodiment configures a core of the optical cable 1.

The core of the optical cable 1 according to the present embodiment further includes a wrapping tube 5 that covers the plurality of optical fiber units 11. The wrapping tube 5 may be formed of, for example, a water absorbing tape. In the present embodiment, the wrapping tube 5 configures an internal space of the optical fiber assembly 2 in which a plurality of optical fiber units 11 are disposed.

The above-described wrapping tube 5 may be omitted, for example. In this case, an inner surface of the outer sheath 3, which will be described later, forms the internal space of the optical fiber assembly 2.

The outer sheath 3 is formed in a tubular shape. The optical fiber assembly 2 is housed inside the outer sheath 3. The plurality of optical fiber units 11 may be housed in the inside of the outer sheath 3 in a twisted state in one direction or in an SZ manner, for example. In addition to the plurality of optical fiber units 11, a filling (not shown) may be housed inside the outer sheath 3. The filling may be, for example, a water absorbing material. The filling may be disposed on the inner side, the outer side, or both of the wrapping tube 5.

The above-described filling may be absent, for example.

An outer shape of the optical fiber assembly 2 in a cross section orthogonal to a longitudinal direction of the optical cable 1 (a direction orthogonal to any of the up-down direction and the left-right direction in FIG. 1, or a direction in which the optical cable 1 extends) may be any shape, but has a substantially circular shape in the present embodiment. In the present specification, the substantially circular shape includes not only a perfect circular shape but also an elliptical shape, an oblong shape, and the like. The outer shape of the optical fiber assembly 2 in the cross section may be, for example, a rectangular shape.

The outer sheath 3 is a member that covers the optical fiber assembly 2. The inner surface of the outer sheath 3 forms a space for housing the optical fiber assembly 2. In the present embodiment, the inner surface of the outer sheath 3 has a substantially circular shape corresponding to the optical fiber assembly 2 in a cross section orthogonal to the longitudinal direction of the optical cable 1. The cross-sectional shape of the inner surface of the outer sheath 3 may be, for example, a rectangular shape. In the present embodiment, the wrapping tube 5 that wraps the plurality of optical fiber units 11 is housed inside the outer sheath 3.

The tension member 7 is disposed in the outer sheath 3. All of the tension members 7 may be disposed in the outer sheath 3, or a part of the tension members 7 may be disposed in the outer sheath 3 and the other part of the tension members 7 may be exposed from the outer sheath 3. Another member, such as a rip cord, may be disposed in the outer sheath 3.

The tension member 7 is disposed in a plurality of pieces so as to sandwich the optical fiber assembly 2 in a cross section orthogonal to the longitudinal direction of the optical cable 1. In the cross section, the plurality of tension members 7 are disposed to face each other with the optical fiber assembly 2 interposed therebetween in a first direction orthogonal to the longitudinal direction. In the present embodiment, in the cross section, the other tension members that are disposed to face each other with the optical fiber assembly 2 interposed therebetween are not disposed in the second direction orthogonal to both the longitudinal direction and the first direction, but the present invention is not limited to this, and the other tension members that are disposed to face each other with the optical fiber assembly 2 interposed therebetween may be disposed in the second direction. Each tension member 7 extends in the longitudinal direction of the optical cable 1. Each tension member 7 may be disposed to be parallel to the longitudinal direction of the optical fiber assembly 2, or may be disposed in a helical shape around the optical fiber assembly 2. Further, each tension member 7 may be included in the optical fiber assembly 2.

In FIG. 1, two tension members 7 are used as one set, and a pair of sets are disposed on both sides of the optical fiber assembly 2, but the present invention is not limited to this. For example, three or more tension members 7 may be used as one set, and a pair of sets may be disposed on both sides of the optical fiber assembly 2. Further, one tension member 7 may be disposed on each of both sides of the optical fiber assembly 2. Further, in FIG. 1, the plurality of tension members 7 forming a set are spaced apart from each other, but may be in contact with each other, for example. Further, the plurality of tension members 7 that form a set may be twisted. It should be noted that a region in which one tension member 7 or a plurality of tension members 7 forming a set are disposed may be referred to as a tension member disposition region.

A line indicated by a reference symbol NL in FIG. 1 shows a neutral line NL of the optical cable 1 (the optical fiber assembly 2) connecting centers of a pair of tension members 7 (or the tension member disposition region). The neutral line NL indicates a position of the optical cable 1 having a small stretch in the longitudinal direction of the optical cable 1 in a case where the optical cable 1 is bent. For example, in FIG. 1, in a case where the optical cable 1 is bent such that the optical cable 1 is convex upward of the neutral line NL, a part of the optical cable 1 located upward of the neutral line NL extends in the longitudinal direction of the optical cable 1, and a part of the optical cable 1 located downward of the neutral line NL shrinks in the longitudinal direction of the optical cable 1.

Since the tension member 7 (or the tension member disposition region) is located on the neutral line NL, the optical cable 1 is easily bent in a direction centered on the neutral line NL and is difficult to bend in other directions. That is, the tension member 7 functions as an application member that applies, to the optical cable, a bending anisotropy that makes the optical cable easier to bend in a direction centered on the neutral line NL.

In the present embodiment, the bending anisotropy is applied to the optical cable 1 by disposing the tension member 7, but the present invention is not limited to this. For example, in a case in which the cross-sectional shape of the optical cable 1 (for example, the cross-sectional shape of the outer sheath 3) is an elliptical shape or a rectangular shape, in the cross section of the optical cable 1, the neutral line NL of bending passes through the center of the minor axis of the elliptical shape or the rectangular shape, and is parallel to the major axis of the elliptical shape or the rectangular shape. Further, even in a case where the cross-sectional shape of the optical cable 1 is circular, in a case where the space (housing space) of the outer sheath 3 that houses the optical fiber assembly 2 is deviated from the center of the optical cable 1 or the housing space is anisotropic, the bending anisotropy is exhibited in the optical cable 1. The neutral line NL of bending can be estimated by calculation from the spatial arrangement of each member in the cross section of the optical cable 1, the elastic modulus (Young's modulus), and the like. In a case where the cross-sectional shape of the optical cable 1 to which the bending anisotropy is applied is formed by the outer sheath 3, the outer sheath 3 functions as an application member that applies, to the optical cable, a bending anisotropy that makes the optical cable easier to bend in a direction centered on the neutral line NL.

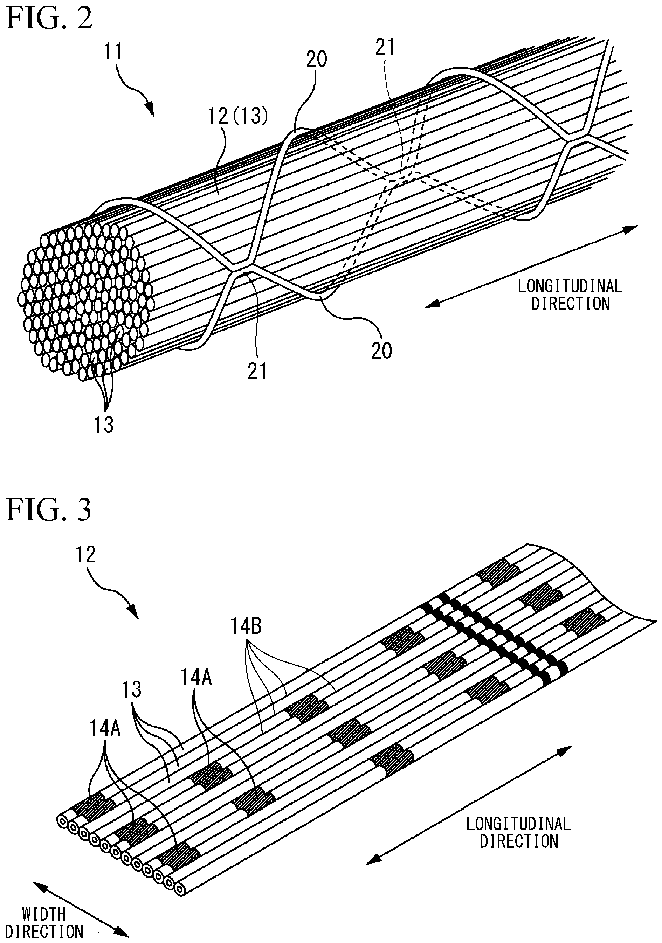

As shown in FIG. 2, the optical fiber unit 11 according to the present embodiment has a structure in which a plurality of optical fibers 13 are bundled by a line body 20 (bundle material). The line body 20 is wound around the outer peripheries of the plurality of optical fibers 13 such that the plurality of optical fibers 13 are not separated from each other. The optical fiber unit 11 may have a structure in which the plurality of optical fibers 13 are twisted together to be bundled without using the line body 20, for example.

The optical fiber unit 11 according to the present embodiment is configured by bundling a plurality of optical fibers 13 to form an optical fiber ribbon 12 having a plurality of optical fibers. It should be noted that the optical fiber ribbon 12 and the non-ribbon optical fiber 13 may be mixed in the optical fiber unit 11.

The optical fiber 13 includes a glass body including a core and a cladding, and a coating layer that covers the glass body. The coating layer may include a coloring layer for identifying the optical fiber 13. A diameter of the glass body is, for example, 125 µm, and a diameter of the coating layer (that is, a diameter of the optical fiber 13) is, for example, 200 to 250 µm. Note that the diameter of the glass body is changeable, and may be, for example, 60 µm, 80 µm, 100 µm, or the like, as long as it is less than 125 µm. The diameter of the coating layer can also be changed, and may be, for example, 200 µm or less such as 160 µm, 180 µm, or 200 µm.

As shown in FIG. 3, the optical fiber ribbon 12 is configured by arranging the plurality of optical fibers 13 in parallel and connecting the adjacent optical fibers 13 to each other. In the following description, in the optical fiber ribbon 12, a direction in which the optical fiber 13 extends may be referred to as a longitudinal direction of the optical fiber ribbon 12, and an arrangement direction of the plurality of optical fibers 13 may be referred to as a width direction of the optical fiber ribbon 12. Further, a direction orthogonal to a longitudinal direction and a width direction of the optical fiber ribbon 12 is defined as a thickness direction of the optical fiber ribbon 12, and a surface facing the thickness direction is sometimes referred to as a ribbon surface.

The optical fiber ribbon 12 according to the present embodiment is an intermittent connection type optical fiber ribbon in which a plurality of (12 in FIG. 3) optical fibers 13 are arranged in parallel and connected to each other in an intermittent manner (partially). Two adjacent optical fibers 13 are connected to each other by a connecting portion 14A. A plurality of the connecting portions 14A are disposed between the two adjacent optical fibers 13 at intervals in the longitudinal direction of the optical fiber ribbon 12. Further, the connecting portion 14A that connects the predetermined optical fiber 13 and the optical fiber 13 adjacent to one side of the optical fiber 13 is displaced from the connecting portion 14Athat connects the predetermined optical fiber 13 and the optical fiber 13 adjacent to the other side of the optical fiber 13 in the longitudinal direction. That is, the plurality of connecting portions 14A are two-dimensionally and intermittently disposed in the longitudinal direction and the width direction of the optical fiber ribbon 12. A region of the two adjacent optical fibers 13 that is not connected by the connecting portion 14A is a non-connecting portion 14B. In the non-connecting portion 14B, the two adjacent optical fibers 13 are not constrained.

The intermittent connection type optical fiber ribbon 12 is not limited to the one shown in FIG. 3. For example, the disposition pattern of the connecting portions 14A that are intermittently disposed may not be a certain pattern. Further, in the intermittent connection type optical fiber ribbon 12, for example, with a plurality (for example, two) of optical fibers 13 as a set, a plurality of sets may be arranged in parallel, and adjacent sets of optical fibers 13 may be connected intermittently by the connecting portions 14A. Further, the optical fibers 13 adjacent to each other in the optical fiber ribbon 12 may be spaced from each other or may be in contact with each other. Further, the number of the optical fibers 13 in the optical fiber ribbon 12 is generally a multiple of 4 (4-core, 8-core, 12-core, or 16-core), but the present invention is not limited thereto. The number of optical fibers 13 in the optical fiber ribbon 12 may be, for example, an odd number.

The optical fiber ribbon 12 can be flexibly deformed in the width direction thereof. For example, the optical fiber ribbon 12 can be deformed such that one ribbon surface thereof is bent in a convex manner. Further, for example, the optical fiber ribbon 12 can be deformed such that the ribbon surface thereof is uneven in the width direction (meandering in the width direction). In particular, since the intermittent connection type optical fiber ribbon 12 has remarkable flexibility in the width direction, the characteristics of the optical fiber 13 are less likely to deteriorate even in a case where the optical fiber ribbons 12 are mounted at a high density.

As shown in FIG. 2, the line body 20 that bundles the plurality of optical fiber ribbons 12 (optical fibers 13) is a thread-like, string-like, or tape-like member having flexibility. The line body 20 is wound around an outer periphery of a bundle of the plurality of the optical fiber ribbons 12. The plurality of optical fiber ribbons 12 may be bundled by, for example, one or three or more line bodies 20. In the optical fiber unit 11 shown in FIG. 2, the plurality of optical fiber ribbons 12 are bundled by two line bodies 20. The plurality of optical fiber ribbons 12 are not limited to being bundled by winding around the line body 20, and may be bundled, for example, by being inserted into a flexible tube or by being wound around a flexible film.

The two line bodies 20 may be wound around the bundle of the optical fiber ribbons 12 in a helical shape, for example. In the present embodiment, the two line bodies 20 are wound around the bundle of the optical fiber ribbons 12 in an SZ manner, respectively. That is, the winding direction of each line body 20 is reversed such that each line body 20 is wound half the outer periphery of the bundle of the optical fiber ribbons 12. The two line bodies 20 are joined to each other at positions where the winding directions thereof are reversed. Reference numeral 21 in FIG. 2 indicates a joint portion of the two line bodies 20. The two line bodies 20 may be joined to each other by, for example, thermal welding or adhesion.

The line body 20 is attached to follow an outer shape of the bundle of the optical fiber ribbons 12. Therefore, the outer shape of the bundle of the optical fiber ribbons 12 can be maintained. As a result, a plurality of optical fiber ribbons 12 can be held even in a state in which the stacked state is collapsed (described later).

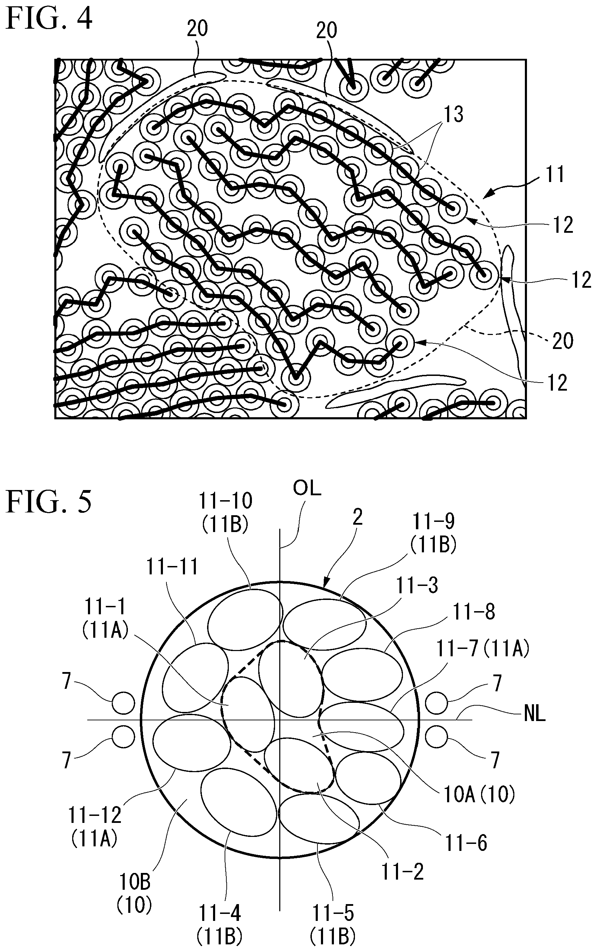

As shown in FIG. 4, the optical fiber unit 11 is configured by bundling a plurality of optical fiber ribbons 12 with a line body 20 in a state where the plurality of optical fiber ribbons 12 are stacked. In the optical fiber unit 11 according to the present embodiment, the stacked state of the plurality of bundled optical fiber ribbons 12 is collapsed in a cross section orthogonal to the longitudinal direction of the optical fiber assembly 2. The "stacked state of the plurality of optical fiber ribbons 12 is collapsed" means a state different from a state in which the plurality of optical fiber ribbons 12 are stacked in a state where the ribbon surface is flat without the plurality of optical fiber ribbons 12 being bent in the width direction, and also means a state in which the ribbon surface of at least one optical fiber ribbon 12 configuring the optical fiber unit 11 is bent in the width direction. Further, the state in which the ribbon surface of the optical fiber ribbon 12 is bent means that, in a cross section of the optical fiber ribbon 12 orthogonal to the longitudinal direction of the optical fiber ribbon 12, the midpoint between the optical fibers 13 at both ends of the optical fiber ribbon 12 in the width direction and the center of gravity (that is, the geometric center) of the optical fiber ribbon 12 are displaced from each other.

In the optical fiber unit 11 shown in FIG. 4, the plurality of optical fiber ribbons 12 in which the stacked state is collapsed are all bent or meandered in the width direction.

In the present embodiment, the plurality of optical fiber ribbons 12 configuring the same optical fiber unit 11 are bundled by the line body 20, so that the stacked state of the plurality of optical fiber ribbons 12 is collapsed. The outer shape of the optical fiber unit 11 shown in FIG. 4 is different from the outer shape of the optical fiber unit 11 shown in FIG. 1, and is not arranged in accordance with the collapse of the stacked state of the plurality of optical fiber ribbons 12.

The state in which the stacked state of the plurality of optical fiber ribbons 12 is collapsed may be established at any position (or all positions) in the longitudinal direction of the optical fiber unit 11 (the optical fiber assembly 2), but may be established at least at a certain position in the longitudinal direction of the optical fiber unit 11 (the optical fiber assembly 2).

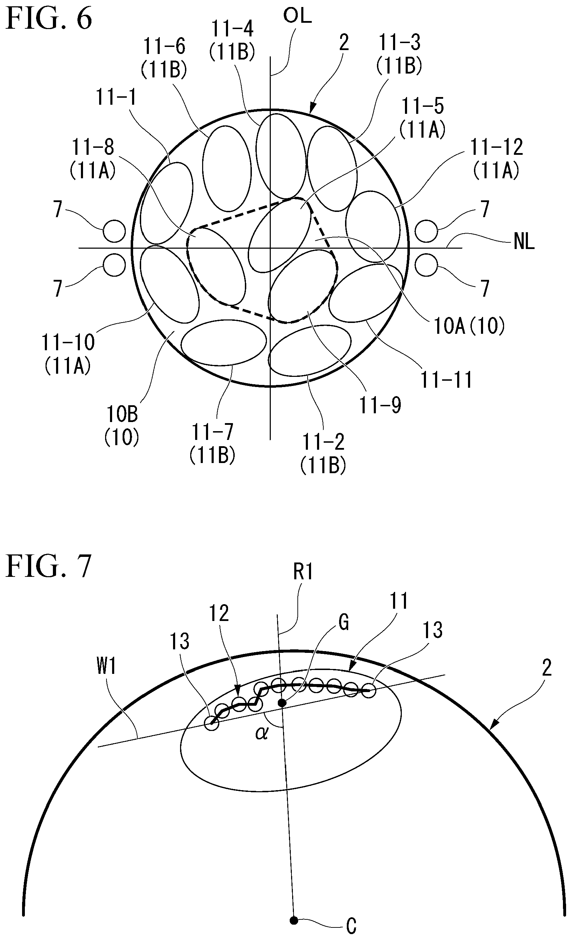

In FIGS. 5 and 6, a region having the optical fiber unit 11 in which the stacked state is collapsed is schematically shown in an elliptical shape. A direction of the major axis of each elliptical shape substantially corresponds to the width direction of the optical fiber ribbon 12. A direction of the minor axis of each elliptical shape substantially corresponds to the stacked direction of the plurality of optical fiber ribbon 12.

As shown in FIGS. 5 and 6, in the optical fiber assembly 2, the plurality of optical fiber units 11 (11-1 to 11-12) are stacked in a radial direction of the optical fiber assembly 2 (a direction orthogonal to a center line passing through a center (geometric center) of the optical fiber assembly 2 in FIGS. 5 and 6) to form a plurality of fiber unit layers 10 arranged in the radial direction of the optical fiber assembly 2. The number of fiber unit layers 10 in FIGS. 5 and 6 is, for example, two. In the following description, among the two fiber unit layers 10, the fiber unit layer 10 located on the inner side in the radial direction of the optical fiber assembly 2 is the inner layer 10A, and the fiber unit layer 10 located on the outer side in the radial direction is the outer layer 10B (or the outermost peripheral layer 10B).

In the configurations shown in FIGS. 5 and 6, the number of the optical fiber units 11 located in the inner layer 10A (inner layer fiber units) is three. Further, the number of the optical fiber units 11 (outer layer fiber units) located in the outer layer 10B is 9.

Further, the plurality of optical fiber units 11 include a first fiber unit 11A and a second fiber unit 11B. The first fiber unit 11A is the optical fiber unit 11 that is located on the neutral line NL of bending of the optical fiber assembly 2 (optical cable 1) in the cross section orthogonal to the longitudinal direction. The fact that the first fiber unit 11A is located on the neutral line NL means that at least one optical fiber ribbon 12 of the first fiber unit 11A is located on the neutral line NL of the optical fiber assembly 2.

The second fiber unit 11B is the optical fiber unit 11 that is located farthest from the neutral line NL in the cross section orthogonal to the longitudinal direction. The second fiber unit 11B includes the optical fiber ribbon 12 that is located farthest from the neutral line NL among the plurality of optical fiber units 11. The second fiber unit 11B is present at least one on each of both sides of the neutral line NL in the cross section orthogonal to the longitudinal direction. That is, the second fiber unit 11B is the optical fiber unit 11 that is located farthest from the neutral line NL in each of two regions obtained by dividing the cross section orthogonal to the longitudinal direction by the neutral line NL. The number of the second fiber units 11B is not limited to two, and may be, for example, three or more. In the present embodiment, the second fiber unit 11B is located on the orthogonal line OL that passes through the center of the optical fiber assembly 2 and is orthogonal to the neutral line NL in the circular cross section of the optical fiber assembly 2 orthogonal to the longitudinal direction, or on the orthogonal line OL or near the orthogonal line OL, and is included in the outer layer 10B.

Next, a disposition (direction) of the first fiber unit 11A and the second fiber unit 11B in a cross section of the optical fiber assembly 2 orthogonal to the longitudinal direction will be described.

First, with reference to FIG. 7, an index indicating the direction of each optical fiber unit 11 in a cross section of the optical fiber assembly 2 will be described. As shown in FIG. 7, in a cross section of the optical fiber assembly 2 orthogonal to the longitudinal direction, a straight line connecting the center C of the optical fiber assembly 2 and the center of gravity G of the predetermined optical fiber ribbon 12 of the predetermined optical fiber unit 11 is defined as a radial direction straight line R1. Further, a straight line connecting both ends of the predetermined optical fiber ribbon 12 of the predetermined optical fiber unit 11 (the optical fiber 13 located at both ends of the optical fiber ribbon 12 in the width direction) is defined as a ribbon width direction straight line W1.

In a cross section orthogonal to the longitudinal direction, the direction of the predetermined optical fiber ribbon 12 included in the predetermined optical fiber unit 11 is indicated by the sine value sinα of the angle α formed by the radial direction straight line R1 and the ribbon width direction straight line W1. In a case in which the sine value sinα indicating the direction of the optical fiber ribbons 12 is large (close to 1), the optical fiber ribbons 12 are disposed such that the width direction (or the ribbon surface) thereof is along the circumferential direction of the optical fiber assembly 2 (the outer sheath 3) (the direction around the center of the optical fiber assembly 2 in FIG. 5 and FIG. 6). On the other hand, in a case in which the sine value sinα indicating the direction of the optical fiber ribbon 12 is small (close to 0), the optical fiber ribbons 12 are disposed such that the width direction (or the ribbon surface) thereof is along the radial direction of the optical fiber assembly 2.

In a cross section orthogonal to the longitudinal direction, the direction of the optical fiber unit 11 is represented by an average value of the sine values sinα (average sine value sinαₐᵥₑ) of the plurality of optical fiber ribbons 12 in the same optical fiber unit 11. That is, the average sine value sinαₐᵥₑ represents an average of sine values in the direction in which the plurality of optical fiber ribbons 12 configuring the same optical fiber unit 11 are facing. The fact that the average sine value sinαₐᵥₑ indicating the direction of the optical fiber unit 11 is large (close to 1) means that the stack direction of the plurality of optical fiber ribbons 12 in the optical fiber unit 11 faces the radial direction of the optical fiber assembly 2 (or close to the radial direction). On the other hand, the fact that the average sine value sinαₐᵥₑ indicating the direction of the optical fiber unit 11 is small (close to 0) means that the stack direction of the plurality of optical fiber ribbons 12 in the optical fiber unit 11 faces the circumferential direction of the optical fiber assembly 2 (or close to the circumferential direction).

In the optical fiber assembly 2 according to the present embodiment, in a cross section orthogonal to the longitudinal direction of the optical fiber assembly 2, the average sine value sinαₐᵥₑ of the second fiber unit 11B shown in FIG. 5 is larger than the average sine value sinαₐᵥₑ of the at least one first fiber unit 11A.

The above-described matter means that with respect to the circumferential direction of the optical fiber assembly 2, the angle of the width direction of the optical fiber ribbons 12 configuring the second fiber unit 11B is smaller than the angle of the width direction of the optical fiber ribbons 12 configuring the first fiber unit 11A. That is, the width direction of the optical fiber ribbons 12 configuring the second fiber unit 11B is along the circumferential direction of the optical fiber assembly 2 rather than the width direction of the optical fiber ribbons 12 configuring the first fiber unit 11A.

In other words, the above-described matter means that with respect to the neutral line NL, the angle of the width direction of the optical fiber ribbons 12 configuring the second fiber unit 11B is smaller than the angle of the width direction of the optical fiber ribbons 12 configuring the first fiber unit 11A. That is, the width direction of the optical fiber ribbons 12 configuring the second fiber unit 11B is along the neutral line NL rather than the width direction of the optical fiber ribbons 12 configuring the first fiber unit 11A.

Further, the above-described matter means that with respect to the circumferential direction of the optical fiber assembly 2, the angle of the width direction of the optical fiber ribbons 12 configuring the at least one first fiber unit 11A is larger than the angle of the width direction of the optical fiber ribbons 12 configuring the second fiber unit 11B. That is, the width direction of the optical fiber ribbons 12 configuring the at least one first fiber unit 11A is along the radial direction of the optical fiber assembly 2 rather than the width direction of the optical fiber ribbons 12 configuring the second fiber unit 11B.

In addition, the fact that the average sine value sinαₐᵥₑ of the second fiber unit 11B is larger than the average sine value sinαₐᵥₑ of the at least one first fiber unit 11A may not be established at all positions in the longitudinal direction of the optical fiber assembly 2, and may be established at least at a certain position in the longitudinal direction. The fact that the average sine value sinαₐᵥₑ of the second fiber unit 11B is larger than the average sine value sinαₐᵥₑ of at least one first fiber unit 11A may be established, for example, in a cross section (certain cross section) of the optical fiber assembly 2 orthogonal to the longitudinal direction at a certain position within a range of each twist pitch (one pitch) in the longitudinal direction. That is, in a cross section different from the above-described certain cross section within the range of the twist pitch, the above-described relationship may not be established. In addition, the two contents described above may be established, for example, over the entire optical fiber assembly 2 in the longitudinal direction.

The above-described twist pitch (one pitch) is a length in the longitudinal direction for the optical fiber units 11 disposed in a helical shape to make one turn in the circumferential direction, in a case where the plurality of optical fiber units 11 are twisted in one direction. Further, in a case where the plurality of optical fiber units 11 are twisted in an SZ manner, the twist pitch (one pitch) is a length (interval) in the longitudinal direction from a position where the twist direction is reversed to a position where the twist direction is reversed next in the same direction. That is, the twist pitch (one pitch) is a length obtained by adding one section in the S direction and one section in the Z direction.

Further, although not shown, in a cross section orthogonal to the longitudinal direction, at least one first fiber unit 11A in which the average sine value sinαₐᵥₑ is smaller than that of the second fiber unit 11B may be located in the inner layer 10A on the inner side in the radial direction of the optical fiber assembly 2.

Next, an example of a manufacturing method of the optical cable 1 according to the present embodiment will be described.

In a case of manufacturing the optical cable 1 according to the present embodiment, first, as shown in FIG. 4, a plurality of optical fiber units 11 in which a plurality of optical fiber ribbons 12 are bundled such that the stacked state of the plurality of optical fiber ribbons 12 is collapsed are prepared. In order to collapse the stacked state of the plurality of optical fiber ribbons 12 when preparing the optical fiber unit 11, for example, the optical fiber ribbons 12 may be deformed in the width direction thereof by squeezing the plurality of stacked optical fiber ribbons 12 thinly in the width direction thereof. Next, an assembly configuring step of bundling the plurality of optical fiber units 11 to form an optical fiber assembly 2 is executed.

In the assembly configuring step, the first fiber unit 11A and the second fiber unit 11B may be disposed such that, in a cross section (certain cross section) orthogonal to the longitudinal direction at a certain position in the longitudinal direction of at least the optical fiber assembly 2, the average sine value sinαₐᵥₑ of the second fiber unit 11B (see FIG. 5) is larger than the average sine value sinαₐᵥₑ of at least one first fiber unit 11A (see FIG. 5). In order to dispose the first fiber unit 11A and the second fiber unit 11B in this way, for example, the directions of the first fiber unit 11A and the second fiber unit 11B are adjusted until a plurality of the optical fiber units 11 reach an assembly point (the position of the optical fiber unit 11 when the configuration of the optical fiber assembly 2 is completed). The first fiber unit 11A is the optical fiber unit 11 that is located on the neutral line NL of bending the optical fiber assembly 2 in the cross section orthogonal to the longitudinal direction. Further, the second fiber unit 11B is the optical fiber unit 11 that is located farthest from the neutral line NL in the cross section orthogonal to the longitudinal direction.

Further, in a case where the plurality of optical fiber units 11 are twisted in one direction or in the SZ manner in the assembly configuring step, in the step, the first fiber unit 11A and the second fiber unit 11B may be disposed such that the average sine value sinαₐᵥₑ of the second fiber unit 11B is larger than the average sine value sinαₐᵥₑ of at least one first fiber unit 11A in a certain cross section within a range of a twist pitch (one pitch).

Further, in the assembly configuring step, the first fiber unit 11A and the second fiber unit 11B may be disposed such that, in a certain cross section in the longitudinal direction, at least one first fiber unit 11A having an average sine value sinαₐᵥₑ smaller than that of the second fiber unit 11B is located in the inner layer 10A of the optical fiber assembly 2.

The above-described assembly configuring step may be performed, for example, when the plurality of optical fiber units 11 are housed inside the outer sheath 3 (see FIG. 1), or may be performed, for example, before the optical fiber assembly 2 is housed inside the outer sheath 3.

The manufacturing of the optical cable 1 is completed by housing the optical fiber assembly 2 (bundled plurality of optical fiber units 11) inside the outer sheath 3. When the optical fiber assembly 2 is housed inside the outer sheath 3, for example, the optical cable 1 having the above-described configuration can be manufactured by adjusting the circumferential direction angle of the optical fiber assembly 2 in accordance with the neutral line NL of bending from the disposition of the tension member 7, the shape of the outer sheath 3, or the like.

As described above, in the optical fiber assembly 2 according to the present embodiment and the optical cable 1 including the same, the average sine value sinαₐᵥₑ of the second fiber unit 11B which is located away from the neutral line NL is larger than the average sine value sinαₐᵥₑ of at least one first fiber unit 11A which is located on the neutral line NL. From this, with respect to the circumferential direction (or the neutral line NL) of the optical fiber assembly 2, the angle of the width direction of the optical fiber ribbons 12 configuring the second fiber unit 11B is smaller than the angle of the width direction of the optical fiber ribbons 12 configuring one first fiber unit 11A. That is, the second fiber unit 11B is disposed such that the width direction of the optical fiber ribbons 12 configuring the second fiber unit 11B is along the circumferential direction (neutral line NL) of the optical fiber assembly 2 rather than the width direction of the optical fiber ribbons 12 configuring the first fiber unit 11A.

Therefore, even when bending stress is generated in the optical fiber unit 11 due to the bending occurring in the optical cable 1 (the optical fiber assembly 2) around the neutral line NL or contraction occurring in the outer sheath 3 of the optical cable 1 in a low-temperature environment, the stress can be prevented from being concentrated on the optical fiber 13 of the optical fiber ribbon 12 configuring the second fiber unit 11B located away from the neutral line NL. Therefore, it is possible to reduce an increase in the transmission loss of the optical fiber 13 in the second fiber unit 11B.

Hereinafter, this point will be described.

For example, a case in which the optical fiber ribbons 12 configuring the optical fiber unit 11 are disposed such that the width direction thereof is along the radial direction of the optical cable 1 (that is, substantially orthogonal to the neutral line NL) (that is, a case in which the average sine value sinαₐᵥₑ is small) is considered. With such a configuration, a plurality of optical fibers 13 configuring the same optical fiber unit 11 are arranged in a direction substantially orthogonal to the neutral line NL. In this configuration, when the optical cable 1 is bent about the neutral line NL, a larger stress (bending stress) due to large expansion and contraction strain acts on the optical fiber 13 located farthest from the neutral line NL of the optical fiber ribbons 12 as compared with the other optical fibers 13 of the optical fiber ribbons 12.

The bending stress increases as the optical fiber unit 11 is located away from the neutral line NL. Therefore, when the second fiber unit 11B that is located farthest from the neutral line NL is disposed as described above, the difference in the expansion and contraction strains of the optical fibers 13 at both ends of the optical fiber ribbon 12 in the width direction increases, and the bending stress acting on the second fiber unit 11B also increases. Therefore, the transmission loss of the optical fiber 13 in the second fiber unit 11B is increased.

Next, a case in which the optical fiber ribbons 12 configuring the optical fiber unit 11 are disposed such that the width direction thereof is along the circumferential direction of the optical fiber assembly 2 (that is, is substantially along the neutral line NL) (that is, a case in which the average sine value sinαₐᵥₑ is large) is considered. With such a configuration, a plurality of optical fibers 13 configuring the same optical fiber unit 11 are arranged substantially along the neutral line NL. In a case where the optical cable 1 is bent about the neutral line NL in this configuration, the difference in the expansion and contraction strain generated in the plurality of optical fibers 13 of the same optical fiber ribbon 12 is small. Therefore, even when the second fiber unit 11B located away from the neutral line NL is disposed as described above, the bending stress acting on the second fiber unit 11B decreases. Therefore, it is possible to reduce an increase in the transmission loss of the optical fiber 13 in the second fiber unit 11B.

In addition, even when the first fiber unit 11A located near the neutral line NL or on the neutral line NL is disposed such that the width direction of the optical fiber ribbon 12 is substantially orthogonal to the neutral line NL (that is, even when the average sine value sinαₐᵥₑ is small), the expansion and contraction strain generated in the optical fiber 13 of the first fiber unit 11A is reduced to be small. Therefore, the bending stress acting on the first fiber unit 11A is reduced, and as a result, an increase in the transmission loss of the optical fiber 13 in the first fiber unit 11A can also be reduced.

Further, since the average sine value sinαₐᵥₑ of the predetermined first fiber unit 11A is smaller than the average sine value sinαₐᵥₑ of the second fiber unit 11B, the predetermined first fiber unit 11A can be disposed in a different direction from the second fiber unit 11B. Thus, the plurality of optical fiber units 11 can be easily disposed without any gap in the internal space of the optical fiber assembly 2. Therefore, it is possible to improve the utilization efficiency of the internal space of the optical fiber assembly 2 in which the plurality of optical fiber units 11 are disposed.

Further, since the stacked state of the plurality of optical fiber ribbons 12 in the optical fiber unit 11 is collapsed, the cross-sectional shape of the optical fiber unit 11 can be made different between the plurality of optical fiber units 11. Thus, the plurality of optical fiber units 11 can be easily disposed without any gap in the internal space of the optical fiber assembly 2. Therefore, it is possible to improve the utilization efficiency of the internal space of the optical fiber assembly 2 in which the plurality of optical fiber units 11 are disposed.

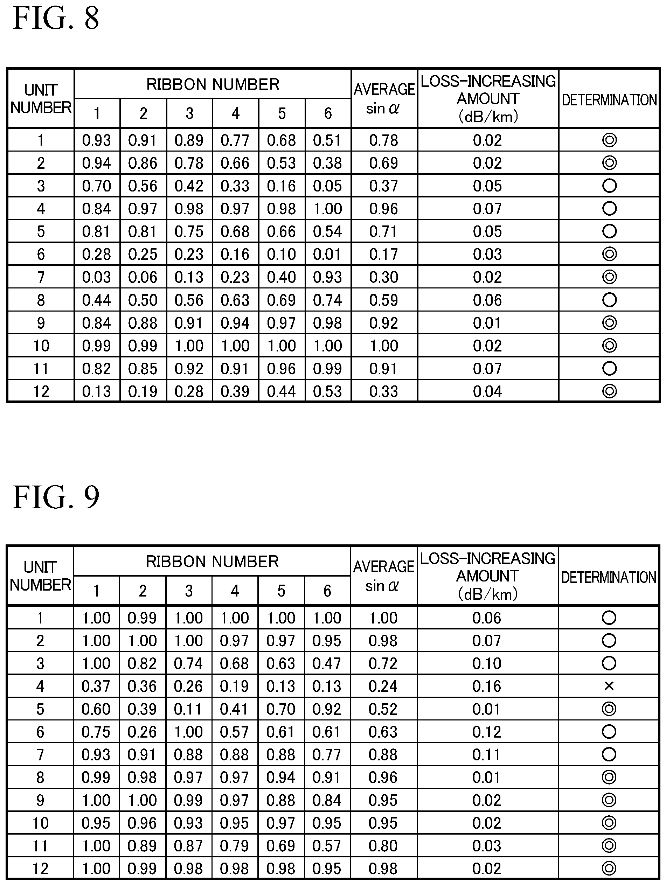

Next, the effects of the above present embodiment will be described with reference to examples shown in FIGS. 5 and 8 and comparative examples shown in FIGS. 6 and 9.

The optical fiber assembly 2 of the example shown in FIG. 5 has 12 optical fiber units 11 (11-1 to 11-12). The 12 optical fiber units 11 configure two fiber unit layers 10 arranged in the radial direction of the optical fiber assembly 2. The three optical fiber units 11 (the first to third optical fiber units 11-1 to 11-3) configure the inner layers 10A of the two fiber unit layers 10. The remaining nine optical fiber units 11 (the fourth to twelfth optical fiber units 11-4 to 11-12) configure the outer layer 10B (outermost peripheral layer 10B) of the two fiber unit layers 10 and are arranged in the circumferential direction of the optical fiber assembly 2 in order. Further, in the example of FIG. 5, the first, seventh, and twelfth optical fiber units 11-1, 11-7, and 11-12 are three first fiber units 11A located on the neutral line NL, and the fourth, fifth, ninth, and tenth optical fiber units 11-4, 11-5, 11-9, and 11-10 are four second fiber units 11B located farthest from the neutral line NL.

The optical fiber assembly 2 of the comparative example shown in FIG. 6 has 12 optical fiber units 11 (11-1 to 11-12) as in the example of FIG. 5. The 12 optical fiber units 11 configure two fiber unit layers 10 arranged in the radial direction of the optical fiber assembly 2. The three optical fiber units 11 (the fifth, eighth, and ninth optical fiber units 11-5, 11-8, and 11-9) configure the inner layers 10A of the two fiber unit layers 10. The remaining nine optical fiber units 11 (the first to fourth, sixth, seventh, tenth to twelfth optical fiber units 11-1 to 11-4, 11-6, 11-7, and 11-10 to 11-12) configure the outer layer 10B (the outermost peripheral layer 10B) of the two fiber unit layers 10 and are arranged in the circumferential direction of the optical fiber assembly 2.

Further, in the comparative example of FIG. 6, the fifth, eighth, tenth, and twelfth optical fiber units 11-5, 11-8, 11-10, and 11-12 are the three first fiber units 11A located on the neutral line NL, and the second to fourth, sixth, and seventh optical fiber units 11-2 to 11-4, 11-6, and 11-7 are the four second fiber units 11B located farthest from the neutral line NL.

The table shown in FIG. 8 shows a relationship between the average sine value sinαₐᵥₑ of the plurality of optical fiber units 11 and the increase amount of the transmission loss of the optical fiber 13 in the example of FIG. 5. The "unit number" in FIG. 8 corresponds to each of the first to twelfth optical fiber units 11-1 to 11-12 in FIG. 5. Further, the "ribbon number" in FIG. 8 corresponds to each of the six optical fiber ribbons 12 included in each optical fiber unit 11.

The table shown in FIG. 9 shows a relationship between the average sine value sinαₐᵥₑ of the plurality of optical fiber units 11 and the increase amount of the transmission loss of the optical fiber 13 in the comparative example of FIG. 6. The "unit number" in FIG. 9 corresponds to each of the first to twelfth optical fiber units 11-1 to 11-12 in FIG. 6. Further, the "ribbon number" in FIG. 9 corresponds to each of the six optical fiber ribbons 12 included in each optical fiber unit 11.

In FIGS. 8 and 9, the sine value sinα of all (72) the optical fiber ribbons 12 configuring the optical fiber assembly 2 is shown in association with the optical fiber unit 11. For example, in the example shown in FIG. 8, the sine value sinα of the first optical fiber ribbon 12 of the first optical fiber unit 11-1 is 0.93. The sine value α of each optical fiber ribbon 12 is based on the angle α (see FIG. 7) of each optical fiber ribbon 12 measured at any five cross sections in the twist pitch of the optical fiber assembly 2 in the longitudinal direction.

The "average sinα" in FIGS. 8 and 9 is an average value of the sine values sinα of the six optical fiber ribbons 12 configuring the same optical fiber unit 11 (that is, an average sine value sinαₐᵥₑ).

The "the increase amount of the loss" in FIGS. 8 and 9 indicates a maximum transmission loss increase amount of the optical fiber 13 measured by the following measurement method (hereinafter, simply referred to as an increase amount of the loss). In the measurement method of measuring the increase amount of the transmission loss of the optical fiber 13, first, a mandrel having a diameter 20 times the diameter of the optical cable 1 is prepared. Next, a bending step is performed in which with the optical cable 1 placed in a straight line as the reference bending angle (0°), the optical cable 1 is pressed against the outer periphery of the mandrel and bent by 90° (+90°), and then the optical cable 1 is pressed against the outer periphery of the mandrel and bent by 90° (-90°) in the direction opposite to the bending direction. The increase amount of the transmission loss of the optical fiber 13 of the optical cable 1 at three bending angles of 0°, +90°, and -90° when the bending step was repeated 25 times was measured with light having a wavelength of 1.55 µm (in accordance with GR-20-CORE Issue4, 6.5.8).

In the "determination" in FIGS. 8 and 9, the optical fiber ribbon 12 in which the increase amount of the loss is 0.15 dB/km or less is determined to be "pass" ("∘" or "⊚"), and the optical fiber ribbon 12 in which the increase amount of the loss is 0.15 dB/km or more is determined to be "fail" ("×"). Further, the optical fiber ribbon 12 in which the increase amount of the loss is 0.05 dB/km or less is determined to be "⊚" (in accordance with GR-20-CORE Issue4, 6.5.2 Optical Acceptance Criteria).

As shown in FIG. 9, in the comparative example of FIG. 6, the average sine values sinαₐᵥₑ of the second, third, sixth, and seventh optical fiber units 11-2, 11-3, 11-6, and 11-7 which are the second fiber units 11B are larger than the average sine value sinαₐᵥₑ (= 0.52) of the fifth optical fiber units 11-5 which is any one first fiber unit 11A. That is, the second, third, sixth, and seventh optical fiber units 11-2, 11-3, 11-6, and 11-7, which are the second fiber units 11B, are disposed such that the width direction of the optical fiber ribbons 12 is substantially along the circumferential direction of the optical fiber assembly 2. The increase amount of the loss of all of the second, third, sixth, and seventh optical fiber units 11-2, 11-3, 11-6, and 11-7 is reduced to 0.15 dB/km or less. That is, it can be seen that the increase amount of the transmission loss of the optical fiber 13 in the second, third, sixth, and seventh optical fiber units 11-2, 11-3, 11-6, and 11-7 can be reduced.

However, the average sine value sinαₐᵥₑ of the fourth optical fiber unit 11-4, which is another one of the second fiber units 11B, is smaller than the average sine value sinαₐᵥₑ of any one of the fifth, eighth, tenth, and twelfth optical fiber units 11-5, 11-8, 11-10, and 11-12, which are the first fiber units 11A. That is, the fourth optical fiber unit 11-4 is disposed such that the width direction of the optical fiber ribbon 12 thereof is substantially along the radial direction of the optical fiber assembly 2. The increase amount of the transmission loss in this fourth optical fiber unit 11-4 exceeds 0.15 dB/km. That is, it can be seen that an increase in the transmission loss of the optical fiber 13 in the fourth optical fiber unit 11-4 cannot be reduced.

On the other hand, as shown in FIG. 8, in the example of FIG. 5, the average sine values sinαₐᵥₑ of the fourth, fifth, ninth, and tenth optical fiber units 11-4, 11-5, 11-9, and 11-10 which are the second fiber units 11B are larger than the average sine values sinαₐᵥₑ of the seventh and twelfth optical fiber units 11-7 and 11-12 which are the first fiber units 11A. That is, all (the fourth, fifth, ninth, and tenth) optical fiber units 11-4, 11-5, 11-9, and 11-10 configuring the second fiber units 11B are disposed such that the width direction of the optical fiber ribbons 12 is substantially along the circumferential direction of the optical fiber assembly 2. The increase amount of the transmission loss in all of the optical fiber units 11-4, 11-5, 11-9, and 11-10 configuring the second fiber unit 11B is reduced to 0.15 dB/km or less. That is, it can be seen that an increase in the transmission loss of the optical fiber 13 can be reduced in all the optical fiber units 11-4, 11-5, 11-9, and 11-10 configuring the second fiber unit 11B.

Further, in the optical fiber assembly 2 and the optical cable 1 according to the present embodiment, in a case where at least one first fiber unit 11A in which the average sine value sinαₐᵥₑ is smaller than that of the second fiber unit 11B (that is, the width direction of the optical fiber ribbons 12 is substantially along the neutral line NL) is located in the inner layer 10A of the optical fiber assembly 2, the expansion and contraction strain generated in the optical fiber 13 of the first fiber unit 11A is reduced to be smaller than that in a case where the first fiber unit 11A is located in the outer layer 10B of the optical fiber assembly 2. Therefore, the bending stress acting on the first fiber unit 11A is reduced, and as a result, an increase in the transmission loss of the optical fiber 13 in the first fiber unit 11A can also be reduced.

Further, in the optical fiber assembly 2 and the optical cable 1 according to the present embodiment, the optical fiber ribbons 12 configuring the optical fiber unit 11 are meandering in the width direction. In this case, the degree of freedom of the relative movement of the plurality of optical fibers 13 configuring the same optical fiber ribbon 12 is larger than in a case in which the optical fiber ribbon 12 does not meander in the width direction. Thus, in a case where the optical fiber assembly 2 is bent or the like, the adjacent optical fibers 13 in the same optical fiber ribbon 12 can move so as to relax the bending stress acting on the optical fiber unit 11. Therefore, it is possible to reduce an increase in the transmission loss of the optical fiber 13.

Further, in the optical fiber assembly 2 and the optical cable 1 according to the present embodiment, the optical fiber unit 11 is configured by stacking and bundling the plurality of optical fiber ribbons 12 with the line body 20. Therefore, it is possible to suppress or prevent the entire periphery of the optical fiber unit 11 (the plurality of optical fiber ribbons 12) from being covered as compared with a case where the plurality of optical fiber ribbons 12 are bundled with a tube. Therefore, as compared with a case where the optical fiber ribbons 12 are bundled with the tube, in a case where the optical fiber assembly 2 is bent or the like, the bundled plurality of optical fiber ribbons 12 or the optical fibers 13 configuring the optical fiber ribbons 12 can move freely. Thus, in a case where the optical fiber assembly 2 is bent or the like, the optical fiber ribbons 12 and the optical fibers 13 configuring the same optical fiber unit 11 can move with respect to each other so as to relax the bending stress acting on the optical fiber unit 11. Therefore, it is possible to reduce an increase in the transmission loss of the optical fiber 13.

Although the details of the present invention have been described above, the present invention is not limited to the above-described embodiment, and various modifications can be made without departing from the gist of the present invention.

The present invention is not limited to being applied to the slotless type optical cable, and may be applied to, for example, a slotted optical cable having a slot rod.

### [Reference Signs List]

2: Optical fiber assembly
7: Tension member (application member)
10A: Inner layer
11: Optical fiber unit
11A: First fiber unit
11B: Second fiber unit
12: Optical fiber ribbon
13: Optical fiber
C: Center of optical fiber assembly 2
G: Center of gravity of optical fiber ribbon 12
NL: Neutral line
R1: Radial direction straight line
W1: Ribbon width direction straight line
α: Angle

## Claims

1. An optical fiber assembly configured by bundling optical fiber units each of which is formed by stacking optical fiber ribbons, wherein
a stacked state of the optical fiber ribbons in the optical fiber unit is collapsed such that a ribbon surface of at least one of the optical fiber ribbons configuring the optical fiber unit is bent, in a cross section of the optical fiber assembly orthogonal to a longitudinal direction of the optical fiber assembly at least at a certain position in the longitudinal direction,
the optical fiber units include one or more first fiber units located on a neutral line of bending of the optical fiber assembly and a second fiber unit located farthest from the neutral line, in a cross section of the optical fiber assembly orthogonal to the longitudinal direction,
regarding a sine value sinα of an angle α formed by a radial direction straight line connecting a center of the optical fiber assembly and a center of gravity of the optical fiber ribbon and a ribbon width direction straight line connecting both ends of the optical fiber ribbon whose enter of gravity is connected to the radial direction straight line, an average value of the sine values sinα of the optical fiber ribbons in the same optical fiber unit is defined as an average sine value sinαₐᵥₑ, and
the average sine value sinαₐᵥₑ of the second fiber unit is larger than the average sine value sinαₐᵥₑ of the one or at least one of the first fiber units, in a cross section of the optical fiber assembly orthogonal to the longitudinal direction at least at a certain position in the longitudinal direction.

2. The optical fiber assembly according to claim 1, wherein
the one or at least one of the first fiber units of which the average sine value sinαₐᵥₑ is smaller than the average sine value sinαₐᵥₑ of the second fiber unit is located on an inner layer on an inner side in a radial direction of the optical fiber assembly, in a cross section of the optical fiber assembly orthogonal to the longitudinal direction at least at a certain position in the longitudinal direction.

3. The optical fiber assembly according to claim 1 or 2, wherein
the optical fiber units are twisted in one direction or in an SZ manner, and
the average sine value sinαₐᵥₑ of the second fiber unit is larger than the average sine value sinαₐᵥₑ of the one or at least one of the first fiber units, in a cross section of the optical fiber assembly orthogonal to the longitudinal direction at a certain position within a range of a twist pitch.

4. The optical fiber assembly according to any one of claims 1 to 3, wherein
the optical fiber unit has a structure in which the optical fiber ribbons are stacked and bundled by a line body.

5. An optical cable comprising:
the optical fiber assembly according to any one of claims 1 to 4; and
an application member that applies, to the optical cable, a bending anisotropy that makes the optical cable easier to bend in a direction centered on the neutral line.
